# EUROPEAN PATENT APPLICATION

(11) **EP 4 216 624 A1**
(43) Date of publication of application: **26.07.2023**
(21) Application number: 21882044.7
(22) Date of filing: 20.10.2021
(51) Int. Cl.: H04W 68/00, H04W 4/06

(54) **PAGING MESSAGE RECEIVING METHOD, PAGING CONFIGURATION METHOD, TERMINAL AND NETWORK-SIDE DEVICE**

(30) Priority: 22.10.2020 CN 202011140839
(71) Applicant: Vivo Mobile Communication Co., Ltd., Dongguan, Guangdong 523863 (CN)
(72) Inventor: ZHANG, Yanxia, Dongguan, Guangdong 523863 (CN)
(74) Representative: Murgitroyd & Company
(86) International application number: PCT/CN2021/124931
(87) International publication number: WO 2022/083629

(57) **Abstract**

The application discloses a paging message receiving method, a paging configuration method, a terminal, and a network side device, belonging to the technical field of wireless communication. The paging message receiving method includes: in a case that the terminal meets a preset condition, monitoring a paging resource at a paging occasion, where the paging resource is used to carry paging indication information, and the preset condition includes: that the terminal is in an air interface connected state; and determining that there is a paging message according to the paging indication information, and receiving the paging message.

## Description

### CROSS-REFERENCE TO RELATED APPLICATION

This application claims priority to Chinese Patent Application No.202011140839.7 filed in China on October 22, 2020, which is incorporated herein by reference in its entirety.

### TECHNICAL FIELD

This application belongs to the technical field of wireless communication, and specifically, relates to a paging message receiving method, a paging configuration method, a terminal, and a network side device.

### BACKGROUND

In long term evolution (LTE) and new radio (NR) R15 and R16 systems, only a non-connected (for example, idle) terminal monitors a paging channel to receive a paging message. Since a network side device knows a location of the connected terminal in the network (for example, which base station covers the terminal), there is no need to page the terminal, and therefore the connected terminal does not try to receive a paging message. In Rel 16 NR, after the introduction of multicast and broadcast service (MBS), a connected terminal needs to receive a paging message. For example, in order to save the overheads of a change notification of the MBS service (such as the start of the MBS service), the network side uniformly notifies terminals through paging.

### SUMMARY

The purpose of the embodiments of the present application is to provide a paging message receiving method, a paging configuration method, a terminal, and a network side device, which can solve the problem that a connected terminal does not try to receive a paging message and therefore misses the paging message.

To resolve the foregoing technical problem, this application is implemented as follows:
According to a first aspect, a paging message receiving method is provided, performed by a terminal, including:
in a case that the terminal meets a preset condition, monitoring a paging resource at a paging occasion, where the paging resource is used to carry paging indication information, and the preset condition includes: that the terminal is in an air interface connected state; and
determining that there is a paging message according to the paging indication information, and receiving the paging message.

According to a second aspect, a paging configuration method is provided, performed by a network side device, including:
sending configuration information, where the configuration information is used to configure that in a case that the terminal meets a preset condition, the terminal monitors a paging resource at a paging occasion, or configure that in a case that the terminal meets the preset condition, the terminal does not monitor the paging resource, where the paging resource is used to carry paging indication information, and the preset condition includes: that the terminal is in an air interface connected state.

According to a third aspect, a paging message receiving apparatus is provided, including:
a monitoring module, configured to: in a case that the terminal meets a preset condition, monitor a paging resource at a paging occasion, where the paging resource is used to carry paging indication information, and the preset condition includes: that the terminal is in an air interface connected state; and
a first receiving module, configured to determine that there is a paging message according to the paging indication information, and receive the paging message.

According to a fourth aspect, a paging configuration apparatus is provided, including:
a sending module, configured to send configuration information, where the configuration information is used to configure that in a case that the terminal meets a preset condition, the terminal monitors a paging resource at a paging occasion, or configure that in a case that the terminal meets the preset condition, the terminal does not monitor the paging resource, where the paging resource is used to carry paging indication information, and the preset condition includes: that the terminal is in an air interface connected state.

According to a fifth aspect, a terminal is provided. The terminal includes a processor, a memory, and a program or an instruction stored in the memory and executable on the processor, where when the program or instruction is executed by the processor, steps of the method according to the first aspect are implemented.

According to a sixth aspect, a network side device is provided. The network-side device includes a processor, a memory, and a program or an instruction stored in the memory and executable on the processor, where when the program or the instruction is executed by the processor, the steps of the method according to the second aspect are implemented.

According to a seventh aspect, a readable storage medium is provided. The readable storage medium stores a program or an instruction, and when the program or the instruction is executed by a processor, the steps of the method according to the first aspect are implemented, or the steps of the method according to the second aspect are implemented.

According to an eighth aspect, a chip is provided. The chip includes a processor and a communications interface, where the communications interface is coupled to the processor, and the processor is configured to execute a program or an instruction of a network-side device, to implement the method according to the first aspect, or the method according to the second aspect.

According to a ninth aspect, a program product is provided, stored in a nonvolatile storage medium, and the program product is executed by at least one processor to implement the method according to the first aspect or implement the method according to the second aspect.

In the embodiments of the present application, the terminal in the air interface connection state can also monitor the paging resource at the paging occasion to try to receive the paging message, so as to avoid missing the paging message.

### BRIEF DESCRIPTION OF DRAWINGS

FIG. 1 is a block diagram of a wireless communication system to which an embodiment of this application is applicable;
FIG. 2 is a schematic flowchart of a paging message receiving method according to an embodiment of the present application;
FIG. 3 is a schematic flowchart of a paging configuration method according to an embodiment of the present application;
FIG. 4 is a schematic structural diagram of a paging message receiving apparatus according to an embodiment of the present application;
FIG. 5 is a schematic structural diagram of a paging configuration apparatus according to an embodiment of the present application;
FIG. 6 is a schematic diagram of a structure of a communication device according to an embodiment of this application;
FIG. 7 is a schematic diagram of a hardware structure of a terminal according to an embodiment of the present application; and
FIG. 8 is a schematic diagram of a hardware structure of a network side device according to an embodiment of the present application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects instead of describing a specific order or sequence. It should be understood that, data used in this way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The described technologies can be applied to both the systems and the radio technologies mentioned above as well as to other systems and radio technologies. However, a new radio (New Radio, NR) system is described in the following description for illustrative purposes, and the NR terminology is used in most of the following description, although these technologies can also be applied to applications other than the NR system application, such as the 6th generation (6^{th} Generation, 6G) communication system.

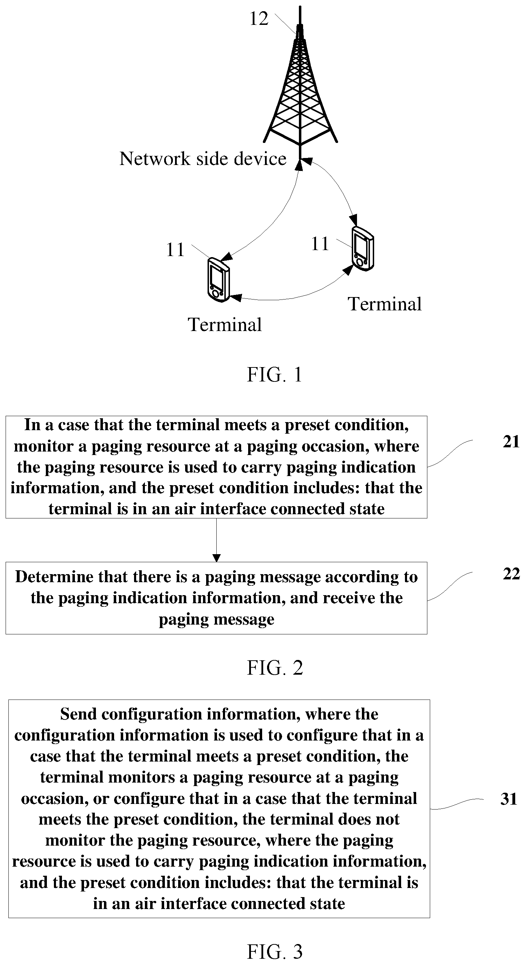

FIG. 1 is a block diagram of a wireless communications system to which embodiments of this application can be applied. The wireless communications system includes a terminal 11 and a network side device 12. The terminal 11 may be referred to as a terminal device or user equipment (User Equipment, UE). The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable device), vehicle user equipment (VUE), and pedestrian user equipment (PUE). The wearable device includes a bracelet, a headset, and glasses. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

The paging message receiving method, the paging configuration method, the terminal and the network side device provided by the embodiments of the present application will be described in detail below through specific embodiments and application scenarios with reference to the accompanying drawings.

Referring to FIG. 2, an embodiment of the present application provides a paging message receiving method, performed by a terminal, including:
Step 21: In a case that the terminal meets a preset condition, monitor a paging resource at a paging occasion, where the paging resource is used to carry paging indication information, and the preset condition includes: that the terminal is in an air interface connected state.

Exemplarily, the paging indication information is used to indicate whether there is a paging message, or the paging indication information indicates that there is paging indication information.

Step 22: Determine that there is a paging message according to the paging indication information, and receiving the paging message.

In the embodiments of the present application, the terminal in the air interface connection state can also monitor the paging resource at the paging occasion to try to receive the paging message, so as to avoid missing the paging message.

In the embodiments of the present application, optionally, the preset condition further includes: that the terminal is in a core network idle state, or that the terminal is in a core network connected state. The terminal being in the air interface connected state and the core network idle state means that the terminal is connected to an access network, but has not established a connection with the core network. The terminal being in the air interface connected state and the core network connected state means that the terminal is connected to an access network, and has established a connection with the core network.

For example, in an embodiment, the terminal only needs to receive broadcast multicast services, and therefore only an air interface connection is established and a core network connection remains idle. In this state, the terminal needs to monitor paging resources at paging occasions to receive dedicated paging information of the terminal and/or change notification indication information of a multicast broadcast service that may arrive (such as a start indication of the multicast broadcast service, or a suspension indication of the multicast broadcast service, or a resume indication of the multicast broadcast service, or a stop indication of the multicast broadcast service). In another embodiment, the terminal also needs to receive broadcast multicast services and unicast services, and therefore an air interface connection and a core network connection are established. In this state, the terminal needs to monitor paging resources at paging occasions to receive change notification indication information of a multicast broadcast service that may arrive (such as a start indication of the multicast broadcast service, or a suspension indication of the multicast broadcast service, or a resume indication of the multicast broadcast service, or a stop indication of the multicast broadcast service).

In this embodiment of the present application, optionally, the preset conditions further include at least one of the following:
1) The terminal has the ability to receive a broadcast multicast service.
   Optionally, the ability to receive a broadcast multicast service includes at least one of the following: a single cell point to multipoint (SC-PTM) receiving capability and a multicast broadcast single frequency network (MBSFN) receiving capability.
2) The terminal is interested in a broadcast multicast service.

For example, the terminal is interested in the multicast broadcast service MBS 1, and therefore monitors the paging resource at the paging occasion to receive the change notification indication information of the multicast broadcast service MBS1 that may arrive (such as a start indication of the multicast broadcast service MB S 1, or a suspension indication of the multicast broadcast service MBS1, or a resume indication of the multicast broadcast service MBS1, or a stop indication of the multicast broadcast service MBS 1).

For example, the terminal is not interested in the multicast broadcast service MBS 1, and therefore will not monitor the paging resource at the paging occasion to receive the change notification indication information of the multicast broadcast service MBS1 that may arrive.

In this embodiment of the present application, optionally, the behavior of monitoring the paging resource at the paging occasion in the case that the terminal meets the preset condition is specified by a protocol. That is, the protocol stipulates that the terminal always needs to monitor the paging resource at the paging occasion when the preset condition is met, or the protocol stipulates that the terminal always does not monitor the paging resource when the preset condition is met. For example, the protocol stipulates that when the terminal is in the air interface connected state and the core network idle state, the terminal always needs to monitor the paging resource at the paging occasion to receive the paging message. Alternatively, the protocol stipulates that when the terminal is in the air interface connected state and the core network idle state, the terminal always does not monitor the paging resource.

As another example, the protocol stipulates that when the terminal is interested in the multicast broadcast service, the terminal always needs to monitor the paging resource at the paging occasion to receive the paging message. Alternatively, the protocol stipulates that when the terminal is interested in the multicast broadcast service, the terminal does not need to monitor the paging resource at the paging occasion.

In this embodiment of the present application, optionally, the behavior of monitoring the paging resource at the paging occasion in the case that the terminal meets the preset condition is configured by the network side. As an example, the network side configures that when the terminal meets the preset condition, the terminal monitors the paging resource at the paging occasion to receive the paging message. In this example, the paging message receiving method further includes: receiving configuration information, where the configuration information is used to configure that in a case that the terminal meets a preset condition, the terminal monitors a paging resource at a paging occasion, or configure that in a case that the terminal meets the preset condition, the terminal does not monitor the paging resource. If the configuration information is used to configure that in a case that the terminal meets a preset condition, the terminal monitors a paging resource at a paging occasion, the terminal monitors the paging resource at the paging occasion in a case that the terminal meets the preset condition, so as to receive the paging message. If the configuration information is used to configure that in a case that the terminal meets a preset condition, the terminal does not monitor the paging resource, the terminal does not monitor the paging resource in a case that the terminal meets the preset condition. That is, the network side configures or pre-configures whether the terminal monitors the paging resource in a case that the terminal meets the preset condition, so that the behavior of the terminal can be more flexibly configured according to specific requirements. For example, the network side configures that in a case that the terminal is in an air interface connected state and a core network idle state, the terminal monitors the paging resource at the paging occasion to receive the paging message. Alternatively, the network side configures that in a case that the terminal is in an air interface connected state and a core network idle state, the terminal does not monitor the paging resource.

In this embodiment of the present application, optionally, before the terminal monitors the paging resource at the paging occasion in a case that the terminal meets the preset condition, the method further includes: determining the paging occasion.

The paging occasion can be understood as an occasion when the terminal monitors the paging resource. In other words, the terminal does not monitor paging resources at a time other than the paging occasion.

In this embodiment of the present application, optionally, the determining the paging occasion includes at least one of the following:
1) determining the paging occasion according to an identifier of the terminal.
   The identifier of the terminal is, for example, 5G-S-TMSI.
2) determining the paging occasion according to a service identifier.
   The service identifier is, for example, a multicast broadcast service identifier TMGI (Temporary Mobile Group Identity), and different services use different TMGIs.
3) determining the paging occasion according to a service type identifier.

The service type identifier is, for example, a public multicast broadcast service identifier TMGI, that is, different services use the same common TMGI, and the public TMGI indicates that the service is a multicast broadcast service.

Optionally, the service identifier is a multicast broadcast service identifier. Further optionally, the service identifier is a multicast broadcast service identifier that the terminal is interested in.

Optionally, the service type identifier is a multicast broadcast service type identifier. Further optionally, the service type identifier is a multicast broadcast service type identifier that the terminal is interested in.

In this embodiment of the present application, optionally, the determining that there is a paging message according to the paging indication information includes at least one of the following:
that the paging indication information indicates that there is the paging message; and
that the paging indication information indicates that there is a paging message carrying a multicast broadcast service.

In this embodiment of the present application, optionally, the paging message carries at least one of the following:
1) dedicated paging information of the terminal.
   For example, a PDCCH received by the terminal at the paging resource position indicates that there is a paging message, and then the terminal receives the paging message at a resource position indicated by the PDCCH. The paging message carries identity information of the terminal (such as carries 5G-S-TMSI of the terminal).
2) change notification indication information of the multicast broadcast service, where the change notification indication information includes at least one of the following: start indication, suspend indication, resume indication, and stop indication.

It should be noted that the paging message carries the change notification indication information of the multicast broadcast service, and may also carry identity information (such as a TMGI) of the multicast broadcast service.

For example, a PDCCH received by the terminal at the paging resource position indicates that there is a paging message related to the multicast broadcast service, and then the terminal receives the paging message at a resource position indicated by the PDCCH. The paging message carries service change notification indication information. For example, new indication information may be introduced in current DCI (such as the new indication information is introduced in a short message field in the DCI), the paging indication information is used to indicate that the paging information has change notification indication information of the multicast broadcast service. By introducing new indication information, before receiving the paging message, the terminal can know that the paging message carries information related to the broadcast multicast service. In this way, it can be ensured that the terminal not interested in the multicast broadcast service does not try to receive the paging message, thereby saving power.

In another example, a PDCCH received by the terminal at the paging resource position indicates that there is a paging message, and then the terminal receives the paging message at a resource position indicated by the PDCCH. The paging message carries service change notification indication information.

Optionally, the paging message also carries scheduling information of the multicast broadcast service. Specifically, the paging message carries the change indication information of the multicast broadcast service, and may also carry scheduling information of the multicast broadcast service. For example, the paging message carries start indication information of a multicast broadcast service MBS1 and at the same time carries scheduling information corresponding to the multicast broadcast service MBS1 (such as a G-RNTI or resource location information). By carrying the scheduling information in the paging message, the terminal can quickly get prepared for receiving data of the multicast broadcast service, and this avoids that because scheduling information of the multicast broadcast service needs to be obtained, a delay is caused in receiving data.

In this embodiment of the present application, optionally, after receiving the paging message, at least one of the following is further included:
1) initiating a core network connection establishment process by the terminal if the paging message carries dedicated paging information of the terminal; optionally, the terminal is in an air interface connected state and a core network idle state.

For example, if the terminal is in an air interface connected state and a core network idle state, when the paging message carries the terminal identifier (such as a 5G-S-TMSI) of the terminal, the terminal initiates a core network connection establishment process. If the terminal sends an RRC message to the network side, the RRC message carries a non-access stratum (NAS) container, and the NAS container carries core network connection establishment related information.

For example, the terminal is in the air interface connected state and the core network idle state. When the paging message only carries the change notification indication information of the multicast broadcast service, the terminal does not initiate the core network connection establishment process. That is, the terminal continues to be in the air interface connected state and the core network idle state.

2) preparing to receive data of the broadcast multicast service by the terminal if the paging message carries a start indication of the broadcast multicast service that the terminal is interested in.

Optionally, the start indication may be understood as an indication that the broadcast multicast service data is about to arrive, or an indication that the multicast broadcast service data has arrived, or an indication that data of the multicast broadcast service has arrived.

Optionally, the preparing to receive data of the broadcast multicast service by the terminal includes at least one of the following:
obtaining scheduling information of the multicast broadcast service; and monitoring a resource corresponding to the data of the broadcast multicast service.

As an example, if the scheduling information of the broadcast multicast service is provided through a system message (such as SIB_X), when the terminal receives start indication information of the broadcast multicast service, the terminal reads the system message (such as SIB_X) that carries the scheduling information of the broadcast multicast service, to obtain the scheduling information of the multicast broadcast service.

As another example, the paging message also carries scheduling information of the multicast broadcast service. Specifically, the paging message carries the change indication information of the multicast broadcast service, and may also carry scheduling information of the multicast broadcast service. The terminal obtains the scheduling information of the multicast broadcast service by reading the paging message.

For example, when the paging message carries the start indication information of the multicast broadcast service MBS1, and the terminal is not interested in the multicast broadcast service MBS1, the terminal does not try to receive data of the multicast broadcast service. It can be understood that not trying to receive the multicast broadcast service data includes at least one of the following:
not obtaining scheduling information of the multicast broadcast service; and
not monitoring a resource corresponding to the data of the broadcast multicast service.

3) suspending receiving data of the broadcast multicast service by the terminal if the paging message carries a suspend indication of the broadcast multicast service that the terminal is interested in.

Optionally, the suspending receiving data of the broadcast multicast service by the terminal includes at least one of the following:
stopping monitoring a resource corresponding to the data of the broadcast multicast service; and
releasing scheduling information of the multicast broadcast service.

For example, if the paging message carries a suspend indication of the multicast broadcast service that the terminal is interested in, the terminal stops monitoring resources (such as scheduling identifiers or resource locations) corresponding to the multicast broadcast service. It can also be understood as not monitoring scheduling identifiers (such as G-RNTIs) corresponding to the multicast broadcast service or not monitoring resource locations corresponding to the multicast broadcast service.

The terminal may also release scheduling information of the multicast broadcast service, such as the scheduling identifier (such as a G-RNTI) corresponding to the multicast broadcast service, or the resource configuration information corresponding to the multicast broadcast service. This is applicable to the scenario where the network side dynamically allocates scheduling information (such as a G-RNTI) for the same broadcast multicast service. For example, before the broadcast multicast service is suspended, the scheduling identifier allocated by the network side for the broadcast multicast service is G-RNTI1. When the multicast broadcast service is resumed, the scheduling identifier allocated by the network side for the broadcast multicast service is G-RNTI2. G-RNTI1 and G-RNTI2 may be different. Therefore, when the multicast broadcast service is suspended, the terminal releases the scheduling information of the multicast broadcast service.

It should be noted that the behavior of releasing the scheduling information of the multicast broadcast service by the terminal may be specified by the protocol or configured by the network side, or may be implemented based on the terminal.

4) resuming receiving data of the broadcast multicast service by the terminal if the paging message carries a resume indication of the broadcast multicast service that the terminal is interested in.

That the terminal resumes receiving the data of the multicast broadcast service may be understood as that the terminal prepares to receive the data of the multicast broadcast service again.

Optionally, the resuming receiving data of the broadcast multicast service by the terminal includes at least one of the following:
obtaining scheduling information of the multicast broadcast service again; and
monitoring a resource corresponding to the data of the broadcast multicast service again.

For example, if the paging message carries a resume indication of the multicast broadcast service that the terminal is interested in, the terminal monitors again resources (such as scheduling identifiers or resource locations) corresponding to the multicast broadcast service. For example, the scheduling identifier (such as a G-RNTI) corresponding to the multicast broadcast service is monitored again.

If the terminal releases the scheduling information of the broadcast multicast service when the broadcast multicast service is suspended, the terminal needs to obtain scheduling information of the multicast broadcast service again, such as the scheduling identifier (such as a G-RNTI) corresponding to the multicast broadcast service, or the resource configuration information corresponding to the multicast broadcast service. Alternatively, the terminal needs to obtain the scheduling information of the broadcast multicast service again when the broadcast multicast service is resumed, and the newly obtained scheduling information of the broadcast multicast service replaces old scheduling information of the broadcast multicast service (such as the old scheduling information may be scheduling information used before the multicast broadcast service is suspended).

It should be noted that the behavior of obtaining the scheduling information of the multicast broadcast service again by the terminal may be specified by the protocol or configured by the network side, or may be implemented based on the terminal.

5) stopping receiving data of the broadcast multicast service by the terminal if the paging message carries a stop indication of the broadcast multicast service that the terminal is interested in.

Optionally, the stopping receiving data of the broadcast multicast service by the terminal includes at least one of the following:
stopping monitoring a resource corresponding to the data of the broadcast multicast service; and
releasing scheduling information of the multicast broadcast service.

Referring to FIG. 3, an embodiment of the present application provides a paging configuration method, performed by a network side device, including:
Step 31: Send configuration information, where the configuration information is used to configure that in a case that the terminal meets a preset condition, the terminal monitors a paging resource at a paging occasion, or configure that in a case that the terminal meets the preset condition, the terminal does not monitor the paging resource, where the paging resource is used to carry paging indication information, and the preset condition includes: that the terminal is in an air interface connected state.

In the embodiments of the present application, the network side configures whether the terminal monitors the paging resource in a case that the terminal meets the preset condition, so that the behavior of the terminal can be more flexibly configured according to specific requirements.

In the embodiments of the present application, optionally, the preset condition further includes: that the terminal is in a core network idle state, or that the terminal is in a core network connected state.

In this embodiment of the present application, optionally, the preset conditions further include at least one of the following:
that the terminal has the ability to receive a broadcast multicast service; and
that the terminal is interested in a broadcast multicast service.

In this embodiment of the present application, optionally, the ability to receive a broadcast multicast service includes at least one of the following: a single cell point to multipoint receiving capability and a multicast broadcast single frequency network receiving capability.

In this embodiment of the present application, optionally, that the terminal monitors the paging resource at the paging occasion in a case that the preset condition is met or that the terminal does not monitor the paging resource in the case that the preset condition is met is configured based on at least one of the following:

### 1) security state information of the terminal.

Optionally, a security state of the terminal includes any of the following:
a state in which the terminal has succeeded verification by a core network; and
a state in which the terminal has failed verification by a core network.

For example, if the terminal in the air interface connected state (such as the terminal in the air interface connected state and the core network idle state) has succeeded the verification by the core network, the network side configures that the terminal does not monitor the paging resource. If the terminal in the air interface connected state has failed the verification by the core network (such as the terminal in the air interface connection state and the core network idle state), the network side configures that the terminal monitors the paging resource. Scenarios in which the terminal has failed the verification by the core network includes at least any one of the following:

The terminal does not send verification information to the network side. For example, the terminal does not send verification information when establishing an air interface connection, where the verification information is used by the core network to verify the identity of the terminal (for example, verify whether the terminal is legal).

An access network device does not send verification information to a core network device. For example, the terminal sends verification information when establishing an air interface connection, where the verification information is used by the core network to verify the identity of the terminal (for example, verify whether the terminal is legal). The access network does not forward, to the core network device, the verification information sent by the terminal.

The access network device sends the verification information to the core network device, but verification by the core network fails. For example, the terminal sends verification information when establishing an air interface connection, where the verification information is used by the core network to verify the identity of the terminal (for example, whether the terminal is legal). The access network forwards, to the core network device, the verification information sent by the terminal. The core network device verifies the terminal based on the verification information, and a verification result is failure (for example, it is verified that the terminal is illegal).

### 2) service state information of the terminal.

Optionally, a service state of the terminal includes any of the following:
a state in which the terminal is interested in a specific service; and
a state in which the terminal is not interested in a specific service.

For example, if the terminal is interested in the multicast broadcast service MBS1, the network side configures that the terminal monitors the paging resource; and if the terminal is not interested in the multicast broadcast service MBS1, the network side configures that the terminal does not monitor the paging resource. The network side can obtain whether the terminal is interested in a specific service through at least one of the following methods:
the terminal reports information indicating whether the terminal is interested in a specific service;
the access network device obtains, from the core network device, information about whether the terminal is interested in a specific service; and
information about whether the terminal is interested in a specific service is obtained from a source node in a handover process.

It should be noted that, the paging message receiving method provided in the embodiments of the present application may be performed by a paging message receiving apparatus, or a control module in the paging message receiving apparatus for performing the paging message receiving method. In the embodiments of the present application, an example in which the paging message receiving apparatus performs the paging message receiving method is used to describe the paging message receiving apparatus provided in the embodiments of the present application.

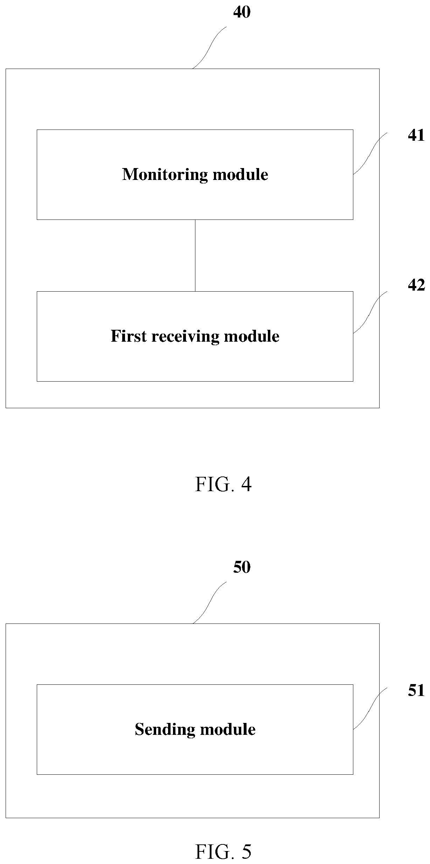

Referring to FIG. 4, an embodiment of the present application further provides a paging message receiving apparatus 40, including:
a monitoring module 41, configured to: in a case that the terminal meets a preset condition, monitor a paging resource at a paging occasion, where the paging resource is used to carry paging indication information, and the preset condition includes: that the terminal is in an air interface connected state; and
a first receiving module 42, configured to determine that there is a paging message according to the paging indication information, and receive the paging message.

In the embodiments of the present application, the terminal in the air interface connection state can also monitor the paging resource at the paging occasion to try to receive the paging message, so as to avoid missing the paging message.

Optionally, the preset condition further includes: that the terminal is in a core network idle state, or that the terminal is in a core network connected state.

Optionally, the preset condition further includes at least one of the following:
that the terminal has the ability to receive a broadcast multicast service; and
that the terminal is interested in a broadcast multicast service.

Optionally, the ability to receive a broadcast multicast service includes at least one of the following: a single cell point to multipoint receiving capability and a multicast broadcast single frequency network receiving capability.

Optionally, the behavior of monitoring the paging resource at the paging occasion in the case that the terminal meets the preset condition is specified by a protocol.

Optionally, the paging message receiving apparatus 40 further includes:
a second receiving module, configured to receive configuration information, where the configuration information is used to configure that in a case that the terminal meets a preset condition, the terminal monitors a paging resource at a paging occasion, or configure that in a case that the terminal meets the preset condition, the terminal does not monitor the paging resource.

Optionally, the paging message receiving apparatus 40 further includes:
a determining module, configured to determine the paging occasion.

Optionally, the determining the paging occasion includes at least one of the following:
determining the paging occasion according to an identifier of the terminal;
determining the paging occasion according to a service identifier; and
determining the paging occasion according to a service type identifier.

Optionally, the service identifier is a multicast broadcast service identifier; and

The service type identifier is a multicast broadcast service type identifier.

Optionally, the determining that there is a paging message according to the paging indication information includes at least one of the following:
that the paging indication information indicates that there is the paging message; and
that the paging indication information indicates that there is a paging message carrying a multicast broadcast service.

Optionally, the paging message carries at least one of the following:
dedicated paging information of the terminal; and
change notification indication information of the multicast broadcast service, where the change notification indication information includes at least one of the following: start indication, suspend indication, resume indication, and stop indication.

Optionally, the paging message also carries scheduling information of the multicast broadcast service.

Optionally, the apparatus further includes at least one of the following:
a connection module, configured to initiate a core network connection establishment process by the terminal if the paging message carries dedicated paging information of the terminal;
a third receiving module, configured to prepare to receive data of the broadcast multicast service by the terminal if the paging message carries a start indication of the broadcast multicast service that the terminal is interested in;
a suspending module, configured to suspend receiving data of the broadcast multicast service by the terminal if the paging message carries a suspend indication of the broadcast multicast service that the terminal is interested in;
a fourth receiving module, configured to resume receiving data of the broadcast multicast service by the terminal if the paging message carries a resume indication of the broadcast multicast service that the terminal is interested in; and
a stop module, configured to stop receiving data of the broadcast multicast service by the terminal if the paging message carries a stop indication of the broadcast multicast service that the terminal is interested in.

Optionally, the third receiving module includes at least one of the following:
a first processing submodule, configured to obtain scheduling information of the multicast broadcast service; and
a second processing submodule, configured to monitor resources corresponding to the data of the broadcast multicast service.

Optionally, the suspending module is configured to include at least one of the following:
a third processing submodule, configured to stop monitoring a resource corresponding to the data of the multicast broadcast service; and
a fourth processing submodule, configured to release the scheduling information of the multicast broadcast service.

Optionally, the fourth receiving module includes at least one of the following:
a fifth processing submodule, configured to obtain the scheduling information of the multicast broadcast service again; and
a sixth processing submodule, configured to monitor resources corresponding to the data of the broadcast multicast service again.

Optionally, the stop module includes at least one of the following:
a seventh processing submodule, configured to stop monitoring a resource corresponding to the data of the broadcast multicast service; and
an eighth processing submodule, configured to release the scheduling information of the multicast broadcast service.

The paging message receiving apparatus in the embodiments of the present application may be an apparatus, or may be a component, an integrated circuit, or a chip in a terminal. The apparatus may be a mobile terminal or a non-mobile terminal. For example, the mobile terminal may include but is not limited to the foregoing listed types of terminals 11. The non-mobile terminal may be a server, a network attached storage (Network Attached Storage, NAS), a personal computer (personal computer, PC), a television (television, TV), a teller machine, or a self-service machine. This is not specifically limited in this embodiment of this application.

The paging message receiving apparatus in the embodiments of the present application may be an apparatus with an operating system. The operating system may be an Android (Android) operating system, an iOS operating system, or another possible operating system, which is not specifically limited in the embodiments of this application.

The paging message receiving apparatus according to an embodiments of the present application can implement the processes in the method embodiments in FIG. 2, and achieve the same technical effect. To avoid repetition, details are not described herein again.

It should be noted that, the paging configuration method provided in the embodiments of the present application may be performed by a paging configuration apparatus, or a control module in the paging configuration apparatus for performing the paging configuration method. In the embodiments of the present application, an example in which the paging configuration apparatus performs the paging configuration method is used to describe the paging configuration apparatus provided in the embodiments of the present application.

Referring to FIG. 5, an embodiment of the present application further provides a paging configuration apparatus 50, including:
a sending module 51, configured to send configuration information, where the configuration information is used to configure that in a case that the terminal meets a preset condition, the terminal monitors a paging resource at a paging occasion, or configure that in a case that the terminal meets the preset condition, the terminal does not monitor the paging resource, where the paging resource is used to carry paging indication information, and the preset condition includes: that the terminal is in an air interface connected state.

Optionally, the preset condition further includes: that the terminal is in a core network idle state, or that the terminal is in a core network connected state.

Optionally, the preset condition further includes at least one of the following:
that the terminal has the ability to receive a broadcast multicast service; and
that the terminal is interested in a broadcast multicast service.

Optionally, the ability to receive a broadcast multicast service includes at least one of the following: a single cell point to multipoint receiving capability and a multicast broadcast single frequency network receiving capability.

Optionally, that the terminal monitors the paging resource at the paging occasion in a case that the preset condition is met or that the terminal does not monitor the paging resource in the case that the preset condition is met is configured based on at least one of following:
security state information of the terminal; and
service state information of the terminal.

Optionally, a security state of the terminal includes any of the following:
a state in which the terminal has succeeded verification by a core network; and
a state in which the terminal has failed verification by a core network.

Optionally, a service state of the terminal includes any of the following:
a state in which the terminal is interested in a specific service; and
a state in which the terminal is not interested in a specific service.

The paging message receiving apparatus according to an embodiments of the present application can implement the processes in the method embodiments in FIG. 3, and achieve the same technical effect. To avoid repetition, details are not described herein again.

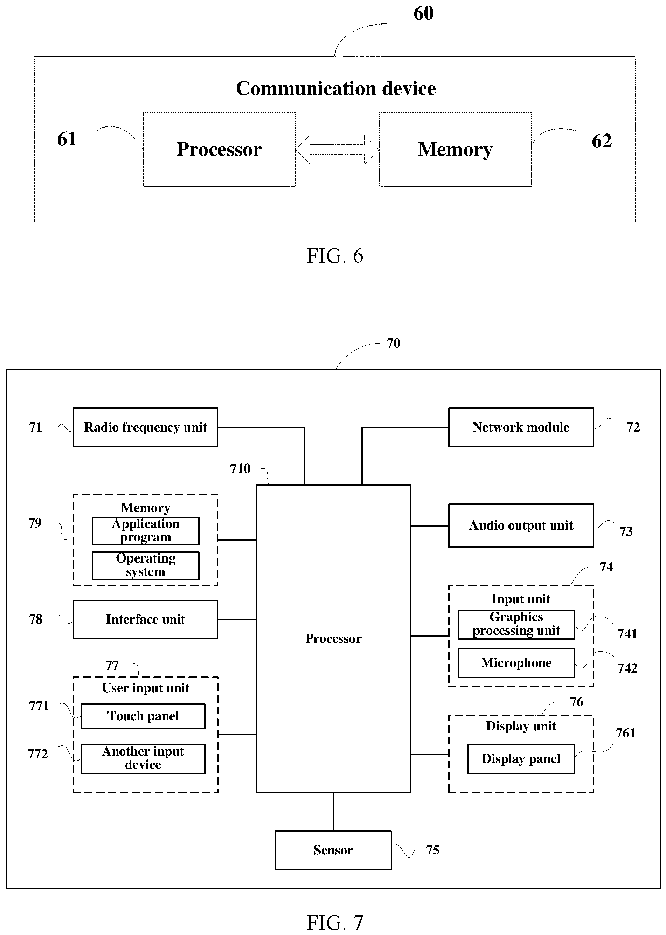

As shown in FIG. 6, an embodiment of the present application also provides a communication device 60, including a processor 61, a memory 62, and programs or instructions stored in the memory 62 and operable on the processor 61, for example, when the communication device 60 is a terminal, when the programs or instructions are executed by the processor 61, each process of the above embodiment of the paging message receiving method can be realized, and the same technical effect can be achieved. When the communication device 60 is a network side device, when the programs or instructions are executed by the processor 61, each process of the above embodiment of the paging configuration method is performed, and the same technical effect can be achieved. To avoid repetition, details are not repeated herein.

FIG. 7 is a schematic diagram of a hardware structure of a terminal according to an embodiment of this application. A terminal 70 includes but is not limited to components such as a radio frequency unit 71, a network module 72, an audio output unit 73, an input unit 74, a sensor 75, a display unit 76, a user input unit 77, an interface unit 78, a memory 79, and a processor 710.

It may be understood by a person skilled in the art that the terminal 70 may further include a power supply (such as a battery) that supplies power to each component. The power supply may be logically connected to the processor 710 by using a power management system, to implement functions such as charging, discharging, and power consumption management by using the power management system. The terminal structure shown in FIG. 7 constitutes no limitation on the terminal, and the terminal may include more or fewer components than those shown in the figure, or combine some components, or have different component arrangements. Details are not described herein.

It should be understood that, in this embodiment of this application, the input unit 74 may include a graphics processing unit (Graphics Processing Unit, GPU) 741 and a microphone 742, and the graphics processing unit 741 processes image data of a still picture or a video obtained by an image capture apparatus (such as a camera) in a video capture mode or an image capture mode. The display unit 76 may include a display panel 761. The display panel 761 may be configured in a form such as a liquid crystal display or an organic light-emitting diode. The user input unit 77 includes a touch panel 771 and another input device 772. The touch panel 771 is also referred to as a touchscreen. The touch panel 771 may include two parts: a touch detection apparatus and a touch controller. The another input device 772 may include but is not limited to a physical keyboard, a functional button (such as a volume control button or a power on/off button), a trackball, a mouse, and a joystick. Details are not described herein.

In this embodiment of this application, the radio frequency unit 71 receives downlink data from a network side device and then sends the downlink data to the processor 710 for processing; and sends uplink data to the network side device. Generally, the radio frequency unit 71 includes but is not limited to an antenna, at least one amplifier, a transceiver, a coupler, a low noise amplifier, a duplexer, and the like.

The memory 79 may be configured to store a software program or an instruction and various pieces of data. The memory 79 may mainly include a program or instruction storage area and a data storage area. The program or instruction storage area may store an operating system, and an application program or an instruction required by at least one function (for example, a sound playing function or an image playing function). In addition, the memory 79 may include a high-speed random access memory, and may further include a non-volatile memory. The non-volatile memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 710 may include one or more processing units. Optionally, an application processor and a modem processor may be integrated into the processor 710. The application processor mainly processes an operating system, a user interface, an application, an instruction, or the like. The modem processor mainly processes wireless communications, for example, a baseband processor. It can be understood that, alternatively, the modem processor may not be integrated into the processor 710.

The processor 710 is configured to: in a case that the terminal meets a preset condition, monitor a paging resource at a paging occasion, where the paging resource is used to carry paging indication information, and the preset condition includes: that the terminal is in an air interface connected state.

The radio frequency unit 71 is configured to determine that there is a paging message according to the paging indication information, and receiving the paging message.

In the embodiments of the present application, the terminal in the air interface connection state can also monitor the paging resource at the paging occasion to try to receive the paging message, so as to avoid missing the paging message.

Optionally, the preset condition further includes: that the terminal is in a core network idle state, or that the terminal is in a core network connected state.

Optionally, the preset condition further includes at least one of the following:
that the terminal has the ability to receive a broadcast multicast service; and
that the terminal is interested in a broadcast multicast service.

Optionally, the ability to receive a broadcast multicast service includes at least one of the following: a single cell point to multipoint receiving capability and a multicast broadcast single frequency network receiving capability.

Optionally, the behavior of monitoring the paging resource at the paging occasion in the case that the terminal meets the preset condition is specified by a protocol.

Optionally, the radio frequency unit 71 is also configured to receive configuration information, where the configuration information is used to configure that in a case that the terminal meets a preset condition, the terminal monitors a paging resource at a paging occasion, or configure that in a case that the terminal meets the preset condition, the terminal does not monitor the paging resource.

Optionally, the processor 710 is further configured to determine the paging occasion.

Optionally, the determining the paging occasion includes at least one of the following:
determining the paging occasion according to an identifier of the terminal;
determining the paging occasion according to a service identifier; and
determining the paging occasion according to a service type identifier.

Optionally, the service identifier is a multicast broadcast service identifier; and
the service type identifier is a multicast broadcast service type identifier.

Optionally, the determining that there is a paging message according to the paging indication information includes at least one of the following:
that the paging indication information indicates that there is the paging message; and
that the paging indication information indicates that there is a paging message carrying a multicast broadcast service.

Optionally, the paging message carries at least one of the following:
dedicated paging information of the terminal; and
change notification indication information of the multicast broadcast service, where the change notification indication information includes at least one of the following: start indication, suspend indication, resume indication, and stop indication.

Optionally, the paging message also carries scheduling information of the multicast broadcast service.

Optionally, the processor 710 is also configured to perform at least one of the following:
initiating a core network connection establishment process by the terminal if the paging message carries dedicated paging information of the terminal;
preparing to receive data of the broadcast multicast service by the terminal if the paging message carries a start indication of the broadcast multicast service that the terminal is interested in;
suspending receiving data of the broadcast multicast service by the terminal if the paging message carries a suspend indication of the broadcast multicast service that the terminal is interested in;
resuming receiving data of the broadcast multicast service by the terminal if the paging message carries a resume indication of the broadcast multicast service that the terminal is interested in; and
stopping receiving data of the broadcast multicast service by the terminal if the paging message carries a stop indication of the broadcast multicast service that the terminal is interested in.

Optionally, the preparing to receive data of the broadcast multicast service by the terminal includes at least one of the following:
obtaining scheduling information of the multicast broadcast service; and
monitoring a resource corresponding to the data of the broadcast multicast service.

Optionally, the suspending receiving data of the broadcast multicast service by the terminal includes at least one of the following:
stopping monitoring a resource corresponding to the data of the broadcast multicast service; and
releasing scheduling information of the multicast broadcast service.

Optionally, the resuming receiving data of the broadcast multicast service by the terminal includes at least one of the following:
obtaining scheduling information of the multicast broadcast service again; and
monitoring a resource corresponding to the data of the broadcast multicast service again.

Optionally, the stopping receiving data of the broadcast multicast service by the terminal includes at least one of the following:
stopping monitoring a resource corresponding to the data of the broadcast multicast service; and
releasing scheduling information of the multicast broadcast service.

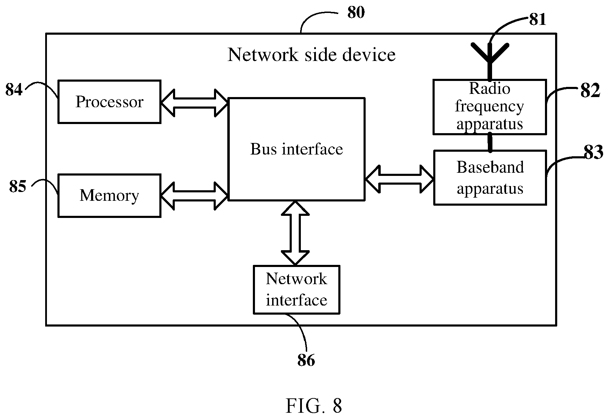

An embodiment of this application further provides a network side device. As shown in FIG.8, the network device 80 includes an antenna 81, a radio frequency apparatus 82, and a baseband apparatus 83. The antenna 81 is connected to the radio frequency apparatus 82. In an uplink direction, the radio frequency apparatus 82 receives information by using the antenna 81, and transmits the received information to the baseband apparatus 83 for processing. In a downlink direction, the baseband apparatus 83 processes information to be sent and sends the information to the radio frequency apparatus 82, and the radio frequency apparatus 82 processes the received information and sends the information through the antenna 81.

The frequency band processing apparatus may be located in the baseband apparatus 83. The method performed by the network side device in the above embodiment may be implemented in the baseband apparatus 83. The baseband apparatus 83 includes a processor 84 and a memory 85.

The baseband apparatus 83 may include, for example, at least one baseband board, and a plurality of chips are arranged on the baseband board. As shown in FIG. 8, one of the chips is, for example, the processor 84, which is connected to the memory 85, to invoke a program in the memory 85, so as to perform the operations of the network device shown in the foregoing method embodiment.

The baseband apparatus 83 may further include a network interface 86, configured to exchange information with the radio frequency apparatus 82, where the interface is, for example, a common public radio interface (common public radio interface, CPRI).

Specifically, the network side device in this embodiment of the present invention further includes an instruction or a program stored in the memory 85 and executable on the processor 84. The processor 84 invokes the instruction or the program in the memory 85 to perform the method performed by the modules shown in FIG. 5, with the same technical effect achieved. To avoid repetition, details are not provided herein again.

An embodiment of the present application further provides a readable storage medium. The readable storage medium stores a program or an instruction, and when the program or the instruction is executed by a processor, each process of the above embodiment of the paging message receiving method is performed, or when the program or the instruction is executed by a processor, each process of the above embodiment of the paging configuration method is performed, and the same technical effects can be achieved. To avoid repetition, details are not described herein again.

The processor is a processor in the terminal in the foregoing embodiment. The readable storage medium includes a computer-readable storage medium such as a computer read-only memory (Read-Only Memory, ROM), a random access memory (Random Access Memory, RAM), a magnetic disk, an optical disc, or the like.

An embodiment of the present application further provides a chip, the chip includes a processor and a communication interface, the communication interface is coupled to the processor, and the processor is configured to execute the program or instruction of the network side device to perform each process of the above embodiment of the paging message receiving method is performed, or perform each process of the above embodiment of the paging configuration method, and the same technical effects can be achieved. To avoid repetition, details are not described herein again.

It should be understood that the chip mentioned in this embodiment of this application may also be referred to as a system-level chip, a system chip, a chip system, or an on-chip system chip.

An embodiment of the present application further provides a program product, the program product is stored in a non-volatile storage medium, and the program product is executed by at least one processor to perform each process of the above embodiment of the paging message receiving method is performed, or the program product is executed by at least one processor to perform each process of the above embodiment of the paging configuration method, and the same technical effects can be achieved. To avoid repetition, details are not described herein again.

An embodiment of the present application further provides a program product, the program product is stored in a non-volatile storage medium, and the program product is executed by at least one processor to perform each process of the above embodiment of the paging message receiving method is performed, or the program product is executed by at least one processor to perform each process of the above embodiment of the paging configuration method, and the same technical effects can be achieved. To avoid repetition, details are not described herein again.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the foregoing specific implementation manners. The foregoing specific implementation manners are merely schematic instead of restrictive. Under enlightenment of this application, a person of ordinary skills in the art may make many forms without departing from aims and the protection scope of claims of this application, all of which fall within the protection scope of this application.

## Claims

1. A paging message receiving method, performed by a terminal, comprising:
in a case that the terminal meets a preset condition, monitoring a paging resource at a paging occasion, wherein the paging resource is used to carry paging indication information, and the preset condition comprises: that the terminal is in an air interface connected state; and
determining that there is a paging message according to the paging indication information, and receiving the paging message.

2. The method according to claim 1, wherein the preset condition further comprises: that the terminal is in a core network idle state, or that the terminal is in a core network connected state.

3. The method according to claim 1 or 2, wherein the preset condition further comprises at least one of following:
that the terminal has an ability to receive a broadcast multicast service; and
that the terminal is interested in a broadcast multicast service.

4. The method according to claim 3, wherein the ability to receive a broadcast multicast service comprises at least one of following: a single cell-point to multipoint receiving capability and a multicast broadcast single frequency network receiving capability.

5. The method according to claim 1, wherein a behavior of monitoring the paging resource at the paging occasion in the case that the terminal meets the preset condition is specified by a protocol.

6. The method according to claim 1, further comprising:
receiving configuration information, wherein the configuration information is used to configure that in a case that the terminal meets a preset condition, the terminal monitors a paging resource at a paging occasion, or configure that in a case that the terminal meets the preset condition, the terminal does not monitor the paging resource.

7. The method according to claim 1, wherein before the monitoring the paging resource at the paging occasion in the case that the terminal meets the preset condition, the method further comprises:
determining the paging occasion.

8. The method according to claim 7, wherein the determining the paging occasion comprises at least one of following:
determining the paging occasion according to an identifier of the terminal;
determining the paging occasion according to a service identifier; and
determining the paging occasion according to a service type identifier.

9. The method according to claim 8, wherein
the service identifier is a multicast broadcast service identifier; and
the service type identifier is a multicast broadcast service type identifier.

10. The method according to claim 1, wherein the determining that there is a paging message according to the paging indication information comprises at least one of following:
that the paging indication information indicates that there is the paging message; and
that the paging indication information indicates that there is a paging message carrying a multicast broadcast service.

11. The method according to claim 1, wherein the paging message carries at least one of following:
dedicated paging information of the terminal; and
change notification indication information of multicast broadcast service, wherein the change notification indication information comprises at least one of following: start indication, suspend indication, resume indication, and stop indication.

12. The method according to claim 11, wherein the paging message further carries scheduling information of the multicast broadcast service.

13. The method according to claim 11, after receiving the paging message, further comprising at least one of following:
initiating a core network connection establishment process by the terminal if the paging message carries dedicated paging information of the terminal;
preparing to receive data of the broadcast multicast service by the terminal if the paging message carries a start indication of the broadcast multicast service that the terminal is interested in;
suspending receiving data of the broadcast multicast service by the terminal if the paging message carries a suspend indication of the broadcast multicast service that the terminal is interested in;
resuming receiving data of the broadcast multicast service by the terminal if the paging message carries a resume indication of the broadcast multicast service that the terminal is interested in; and
stopping receiving data of the broadcast multicast service by the terminal if the paging message carries a stop indication of the broadcast multicast service that the terminal is interested in.

14. The method according to claim 13, wherein the preparing to receive data of the broadcast multicast service by the terminal comprises at least one of following:
obtaining scheduling information of the multicast broadcast service; and
monitoring a resource corresponding to the data of the broadcast multicast service.

15. The method according to claim 13, wherein the suspending receiving data of the broadcast multicast service by the terminal comprises at least one of following:
stopping monitoring a resource corresponding to the data of the broadcast multicast service; and
releasing scheduling information of the multicast broadcast service.

16. The method according to claim 13, wherein the resuming receiving data of the broadcast multicast service by the terminal comprises at least one of following:
obtaining scheduling information of the multicast broadcast service again; and
monitoring a resource corresponding to the data of the broadcast multicast service again.

17. The method according to claim 13, wherein the stopping receiving data of the broadcast multicast service by the terminal comprises at least one of following:
stopping monitoring a resource corresponding to the data of the broadcast multicast service; and
releasing scheduling information of the multicast broadcast service.

18. A paging configuration method, performed by a network side device, comprising:
sending configuration information, wherein the configuration information is used to configure that in a case that a terminal meets a preset condition, the terminal monitors a paging resource at a paging occasion, or configure that in a case that the terminal meets the preset condition, the terminal does not monitor the paging resource, wherein the paging resource is used to carry paging indication information, and the preset condition comprises: that the terminal is in an air interface connected state.

19. The method according to claim 18, wherein the preset condition further comprises: that the terminal is in a core network idle state, or that the terminal is in a core network connected state.

20. The method according to claim 18 or 19, wherein the preset condition further comprises at least one of following:
that the terminal has an ability to receive a broadcast multicast service; and
that the terminal is interested in a broadcast multicast service.

21. The method according to claim 20, wherein the ability to receive a broadcast multicast service comprises at least one of following: a single cell point to multipoint receiving capability and a multicast broadcast single frequency network receiving capability.

22. The method according to claim 18, wherein that the terminal monitors the paging resource at the paging occasion in a case that the preset condition is met or that the terminal does not monitor the paging resource in the case that the preset condition is met is configured based on at least one of following:
security state information of the terminal; and
service state information of the terminal.

23. The method according to claim 22, wherein a security state of the terminal comprises any one of following:
a state in which the terminal has succeeded verification by a core network; and
a state in which the terminal has failed verification by a core network.

24. The method according to claim 22, wherein a service state of the terminal comprises any one of following:
a state in which the terminal is interested in a specific service; and
a state in which the terminal is not interested in a specific service.

25. A paging message receiving apparatus, comprising:
a monitoring module, configured to: in a case that the terminal meets a preset condition, monitor a paging resource at a paging occasion, wherein the paging resource is used to carry paging indication information, and the preset condition comprises: that the terminal is in an air interface connected state; and
a first receiving module, configured to determine that there is a paging message according to the paging indication information, and receive the paging message.

26. The apparatus according to claim 25, further comprising:
a second receiving module, configured to receive configuration information, wherein the configuration information is used to configure that in a case that the terminal meets a preset condition, the terminal monitors a paging resource at a paging occasion, or configure that in a case that the terminal meets the preset condition, the terminal does not monitor the paging resource.

27. The apparatus according to claim 25, further comprising:
a determining module, configured to determine the paging occasion.

28. The device according to claim 25, wherein the paging message carries at least one of following:
dedicated paging information of the terminal; and
change notification indication information of multicast broadcast service, wherein the change notification indication information comprises at least one of following: start indication, suspend indication, resume indication, and stop indication.

29. The apparatus according to claim 28, further comprising:
a connection module, configured to initiate a core network connection establishment process by the terminal if the paging message carries dedicated paging information of the terminal;
a third receiving module, configured to prepare to receive data of the broadcast multicast service by the terminal if the paging message carries a start indication of the broadcast multicast service that the terminal is interested in;
a suspending module, configured to suspend receiving data of the broadcast multicast service by the terminal if the paging message carries a suspend indication of the broadcast multicast service that the terminal is interested in;
a fourth receiving module, configured to resume receiving data of the broadcast multicast service by the terminal if the paging message carries a resume indication of the broadcast multicast service that the terminal is interested in; and
a stop module, configured to stop receiving data of the broadcast multicast service by the terminal if the paging message carries a stop indication of the broadcast multicast service that the terminal is interested in.

30. A paging configuration apparatus, comprising:
a sending module, configured to send configuration information, wherein the configuration information is used to configure that in a case that a terminal meets a preset condition, the terminal monitors a paging resource at a paging occasion, or configure that in a case that the terminal meets the preset condition, the terminal does not monitor the paging resource, wherein the paging resource is used to carry paging indication information, and the preset condition comprises: that the terminal is in an air interface connected state.

31. The apparatus according to claim 30, wherein the preset condition further comprises: that the terminal is in a core network idle state, or that the terminal is in a core network connected state.

32. The apparatus according to claim 30, wherein that the terminal monitors the paging resource at the paging occasion in a case that the preset condition is met or that the terminal does not monitor the paging resource in the case that the preset condition is met is configured based on at least one of following:
security state information of the terminal; and
service state information of the terminal.

33. The apparatus according to claim 32, wherein a security state of the terminal comprises any one of following:
a state in which the terminal has succeeded verification by a core network; and
a state in which the terminal has failed verification by a core network.

34. The apparatus according to claim 32, wherein a service state of the terminal comprises any one of following:
a state in which the terminal is interested in a specific service; and
a state in which the terminal is not interested in a specific service.

35. A terminal, comprising a processor, a memory, and a program or an instruction stored in the memory and executable on the processor, wherein when the program or instruction is executed by the processor, steps of the paging message receiving method according to any one of claims 1 to 17 are implemented.

36. A network side device, comprising a processor, a memory, and a program or an instruction stored in the memory and executable on the processor, wherein when the program or instruction is executed by the processor, steps of the paging configuration method according to any one of claims 18 to 24 are implemented.

37. A readable storage medium, storing a program or an instruction on the readable storage medium, wherein when the program or instruction is executed by a processor, steps of the paging message receiving method according to any one of claims 1 to 17 are implemented, or steps of the paging configuration method according to any one of claims 18 to 24 are implemented.

38. A chip, comprising a processor and a communication interface, wherein the communication interface is coupled to the processor, and the processor is configured to execute a program or an instruction to implement steps of the paging message receiving method according to any one of claims 1 to 17, or steps of the paging configuration method according to any one of claims 18 to 24.

39. A program product, wherein the program product is stored in a non-volatile storage medium, and the program product is executed by at least one processor to implement steps of the paging message receiving method according to any one of claims 1 to 17, or steps of the paging configuration method according to any one of claims 18 to 24.
